Europäisches Patentamt

European Patent Office

Office européen des brevets

(11) Publication number: **0 488 076 A2**

# EUROPEAN PATENT APPLICATION

(21) Application number: **91119944.6**

(22) Date of filing: **22.11.91**

(51) Int. Cl.5: **G01G 3/14**, G01G 21/10, G01G 23/08, G01L 1/22

(30) Priority: **26.11.90 IT 2218890**

(43) Date of publication of application:
**03.06.92 Bulletin 92/23**

(84) Designated Contracting States:
**CH DE ES FR GB LI NL**

(71) Applicant: **METRO S.r.l.**
**Via P. Giuliani 10/A**
**I-20125 Milano(IT)**

(72) Inventor: **Azzi, Azzo Alberto**
**Via Arbe 48**
**I-20125 Milano(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) **Load-cell device with movable side panels particularly for measuring forces, weights or the like.**

(57) Load-cell device with movable panels particularly for measuring forces, weights or the like, which comprises a vessel (1) which is sealed tight and delimits a cavity (2) which contains a damping fluid (3). The load-cell device with movable panels (6) further comprises a load cell (4) which is immersed in the damping fluid (3) inside the cavity (2) and on which movable panels (6) are pivoted along edges (5) of the load cell (4). The movable panels (6) are spaced from the load cell (4) by virtue of adjustment means and are attracted toward one another by virtue of elastic means. The adjustment means comprise, in a preferred embodiment, set screws (8) which are removably fixed to the panels (6) and which are lockable in a preset position by dock nets (9). The set screws 8 are provided with a head which engages an eccentric toothed wheel (10) which can rotate angularly by means of a pivot (11) to thereby vary the angle formed between the panels (6). The elastic means advantageously comprise a spring (13) fixed between the panels (6).

Fig.1

The present invention relates to a load-cell device with movable side panels particularly for measuring forces, weights or the like.

Load cells immersed in a high-viscosity fluid contained inside a vessel are currently used to measure forces or weights in the presence of vibrations in the load or in the environment. The load cell is retained between two fixed panels, and the electric signal which is obtained from the load cell represents the physical quantity, force or weight, being measured. The motion imparted to the load cell by the object being measured is damped by the interaction of the viscous fluid with said load cell and with the fixed panels.

Known load cells are the source of problems which negatively affect the measurement to be performed. A first disadvantage is substantially related to the degree of damping which the viscous fluid, usually a silicone oil, imparts to the load cell. This degree of damping is fixed and cannot vary according to the different conditions of use, and this is due to the fixed panels which are used.

Another disadvantage is related to behavior when the temperature of the viscous fluid varies; said fluid changes its viscosity very significantly even for small variations in the work temperature, and thus significantly changes its damping properties, with consequent unexpected and undue variations in the response of the load cell.

The aim of the present invention is to eliminate or substantially reduce the disadvantages described above in known cell types by providing a load-cell device with movable panels particularly for measuring forces, weights or the like, which allows to vary the degree of damping of the load-cell device.

Within the scope of this aim, an object of the present invention is to provide a load-cell device with movable panels which substantially reduces response variations as a function of mechanical stress and of the state of the environment.

Not least object of the present invention is to provide a load-cell device which is relatively easy to manufacture and at competitive costs.

This aim, these objects and others which will become apparent hereinafter are achieved by a load-cell device with movable panels particularly for measuring forces, weights or the like according to the invention, comprising a vessel which is sealed tight and delimits a cavity which contains a damping fluid, characterized in that it comprises a load cell which is immersed in said damping fluid within said cavity and on which movable panels are pivoted along edges of said load cell, said panels being spaced from said load cell by virtue of adjustment means and being attracted toward each other by virtue of elastic means.

Further characteristics and advantages of the invention will become apparent from the description of a preferred but not exclusive embodiment of a load-cell device with movable panels particularly for measuring forces, weights or the like according to the invention, illustrated by way of non-limitative example in the accompanying drawings, wherein:

figure 1 is a perspective view of a load cell with the movable panels pivoted thereto; and

figure 2 is a plan view of the load cell with the adjustment means and the elastic means.

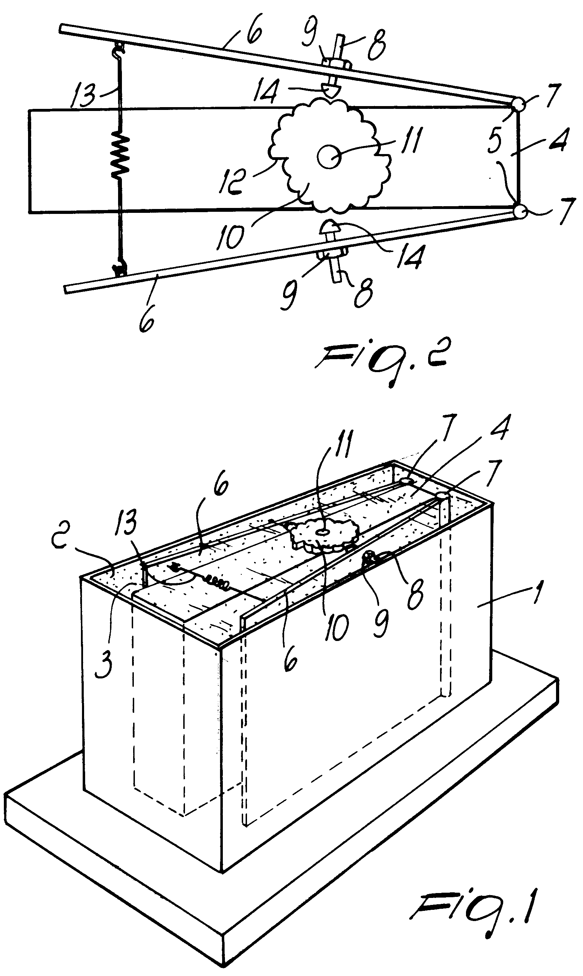

With reference to the above figures, a load-cell device with movable panels particularly for measuring forces, weights or the like comprises a vessel 1 which is sealed tight and delimits a cavity 2 which contains a damping fluid 3 constituted by a viscous fluid such as for example silicone oil and the like.

The load-cell device furthermore comprises a load cell 4 which is immersed in the silicone oil 3 inside the cavity 2. Movable panels 6 are pivoted on the load cell 4 along parallel edges 5 thereof by means of hinges 7. The movable panels 6 are spaced from the load cell 4 by virtue of adjustment means and are attracted toward one another by virtue of elastic means.

The adjustment means comprise respective set screws 8 which are removably fixed to the movable panels 6. The set screws 8 can be locked in a preset position by means of lock nuts 9.

Each of the set screws 8 has a respective head 14 which engages an eccentric toothed wheel 10 which can rotate angularly by means of a pivot 11 which is coaxial to the eccentric toothed wheel 10. The pivot 11 can rotate angularly, engages the load cell 4 and furthermore sealingly protrudes from the vessel 1.

The eccentric toothed wheel 10 is composed of two half-wheels which are mutually offset by a preset extent 12.

The elastic means are constituted by a spring 13, the ends of which are fixed to a respective panel 6.

The eccentric toothed wheel 10 increases or decreases the aperture angle of the panels 6 with respect to the load cell 4 under the actuation of the pivot 11.

The widening or narrowing of the angle delimited by the walls of the load cell 4 and the panels 6 depends essentially on the eccentricity of the eccentric toothed wheel 10. It should be furthermore noted that the angle is varied in discrete steps, since said toothed wheel 10 has a peripheral set of teeth which defines a discrete shift step and on which the head 14 of the set screw 8 acts. Besides defining a discrete variation step, the combined effects of the teeth and of the spring 13 cause the position of the wheel to be unable to vary, despite considerable vibrations, thus maintaining the preset degree of damping.

The variation of the angle entails a variation in the degree of damping of the cell according to the invention. Setup of the cell is in fact performed with the maximum degree of damping, i.e. with the panels 6 as adjacent as possible, without contact, to the load cell 4. Setup is obviously performed by appropriately setting the length of the set screws 8 and by then locking them in the required position by means of the lock nuts 9.

By widening the panels 6, under the actuation of the pivot 11 and by means of the wheel 10, the degree of damping of the cell is thus reduced, thus allowing a discrete variation in the degree of damping of the cell.

The cell according to the invention can be provided with an electric temperature adjustment circuit capable of allowing a fine thermostatic adjustment of the temperature of the viscous fluid, the viscosity of which varies with temperature. The electric circuit (not shown) can be composed of a negatively-fedback chain in which a thermistor acts as temperature sensor, proportionally adjusting the heating of a power transistor.

Said thermostatic device is not strictly indispensable for the correct operation of the cell according to the invention, but it can constitute an advantageous aid both for varying the degree of damping by varying the viscosity of the fluid and for providing a thermostatic control for stabilizing the temperature of the fluid at a preset level, thus making the cell according to the invention substantially insensitive to environment temperature variations which in known fixed-damping cells not equipped with a thermostat unfortunately usually considerably alter the constancy of the damping, especially in the not infrequent cases in which the load cells must operate outdoors or in countries with a cold climate.

Advantageously, the load-cell device according to the invention therefore allows a dual control of the degree of damping, both from a mechanical point of view and from a thermal point of view, allowing to "tune" the degree of damping to the actual needs of each individual instance of application of the device according to the invention on different machines which, as usually occurs, are subjected to different interactions and most of all can be subjected to vibrations which, as universally known, can interfere with known load cells, whereas by virtue of the possibility of this "tuning" it is possible to seek the degree of damping most suitable for cushioning vibrations with different spectral composition originating both from the machine in which the cell according to the invention is installed and from neighboring machines or from the environment.

The invention thus conceived is susceptible to numerous modifications and variations, all of which are within the scope of the inventive concept.

In an alternative embodiment, the wheel 10 is neither toothed nor eccentric but elliptical. In this case, the screws 8 rest their heads 14 on the perimeter of the ellipse.

Another alternative embodiment uses rods which are articulated from the actuation pivot with eccentric jointed couplings in order to adjust the angle of the panels, to which the rods are connected, under the rotation action of said pivot.

A further alternative embodiment provides a circular toothed wheel and rods articulated on the panels.

Yet another alternative embodiment provides, instead of the wheel, a gooseneck to which the rods are articulated.

In a further alternative embodiment, a spring keeps the panels divaricated, whereas their approach to the load cell is adjusted by metallic chains or cables which are coupled to the panels with one end and wind around the actuation shaft with their other end when said shaft is rotated.

A final alternative embodiment provides a wedge actuated by a screw adjustment device which inserts itself between the heads 14 so as to divaricate the panels, eliminating the shaft.

All the details may furthermore be replaced with other technically equivalent elements.

In practice, the materials employed, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Load-cell device with movable panels particularly for measuring forces, weights or the like, comprising a vessel (1) which is sealed tight and delimits a cavity (2) which contains a damping fluid (3), characterized in that it comprises a load cell (4) which is immersed in said damping fluid (3) inside said cavity (2) and on which movable panels (6) are pivoted along edges (5) of said load cell (4), said panels (6) being spaced from said load cell (4) by virtue of adjustment means (8-12,14) and being attracted toward each other by virtue of elastic means (13).

2. Load-cell device according to claim 1, characterized in that said adjustment means comprise respective set screws (8) which are removably fixed to said panels (6), said set screws (8) being lockable in a preset position by means of lock nuts (9), each of said screws (8) having a head (14) which engages an eccentric toothed wheel (10) which can rotate angularly by means of a pivot (11) which rotatably engages said load cell (4), said pivot (11) sealingly protruding from said vessel (1).

3. Load-cell device according to the preceding claims, characterized in that said eccentric toothed wheel (10) is composed of two half-wheels which are mutually offset by a preset length (12).

4. Load-cell device according to one or more of the preceding claims, characterized in that said elastic means are constituted by a spring (13) the ends of which are fixed to a respective panel (6).

5. Load-cell device according to one or more of the preceding claims, characterized in that said panels (6) are pivoted to said load cell (4) along parallel edges (5).

6. Load-cell device according to one or more of the preceding claims, characterized in that a layer of sponge (natural, rubber or synthetic) or of fabric of any type, in the presence but also in the absence of damping fluid, is interposed between the panels (6) and the load cell (4).

7. Load-cell device according to one or more of the preceding claims, characterized in that said eccentric toothed wheel (10) is suitable for increasing or decreasing the angle of aperture of said panels (6) with respect to said load cell (4) under the actuation of said pivot (11).

8. Load-cell device according to one or more of the preceding claims, characterized in that it comprises at least one thermostatic device which is selectively suitable for varying the viscosity of the fluid (3) by means of a temperature variation and for thermally stabilizing said fluid (3) with respect to environmental heat variations.

Fig.2

Fig.1